# FASCICULE DE BREVET EUROPEEN

(11) **EP 3 978 319 B1**
(45) Date de publication et mention de la délivrance du brevet: **29.03.2023**
(21) Numéro de dépôt: 21198670.8
(22) Date de dépôt: 23.09.2021
(51) Int. Cl.: B60R 19/24, B60R 19/18, B60R 19/50

(54) **VÉHICULE À ARMATURE DE PARE-CHOCS MAINTENUE RÉDUISANT LES RISQUES DE BLESSURES**
FAHRZEUG MIT STABILER STOSSFÄNGERRAHMEN ZUR VERRINGERUNG DES VERLETZUNGSRISIKOS
VEHICLE WITH SUPPORTED BUMPER FRAME FOR REDUCING THE RISK OF INJURIES

(30) Priorité: 30.09.2020 FR 2010010
(43) Date de publication de la demande: 06.04.2022
(73) Titulaire: PSA Automobiles SA, 78300 Poissy (FR)
(72) Inventeur: YIN, JUNLONG, SHANGHAI, 200233 (CN); WANG, HONGRI, SHANGHAI, 200233 (CN); JIANG, HUAN JUN, SHANGHAI, 200233 (CN); YAN, JING, SHANGHAI, 200233 (CN); WANG, LITING, SHANGHAI, 200233 (CN)

(56) Documents cités:
- EP-A1- 3 434 532
- WO-A1-2006/111299
- WO-A1-2019/058039
- DE-A1-102013 007 896

## Description

L'invention concerne un véhicule comportant une armature de pare-chocs à l'avant et des moyens de maintien de ladite armature de pare-chocs.

L'avant d'un véhicule comporte généralement une peau de pare-chocs, deux projecteurs avant disposés de part et d'autre de la face avant du véhicule, un capot moteur dont la partie avant, classiquement nommé nez de capot, est à proximité de la partie haute de la peau de pare-chocs. Une traverse de pare-chocs est disposée derrière la peau de pare-chocs, c'est-à-dire entre la structure du véhicule et la peau de pare-chocs, reliée à la structure du véhicule par des absorbeurs classiquement nommés « crashbox ». Les absorbeurs sont par exemple reliés aux deux brancards avant du véhicule. La peau de pare-chocs remonte au-dessus de la traverse de pare-chocs, c'est-à-dire une hauteur supérieure en se plaçant dans le référentiel du véhicule.

Il est connu de placer derrière la peau de pare-chocs avant du véhicule une armature de pare-chocs. Cette armature de pare-chocs est un élément rigide sur lequel s'appuie la peau de pare-chocs, et en particulier la partie de la peau de pare-chocs située au-dessus de la traverse de pare-chocs. Elle permet de maintenir en forme la peau de pare-chocs qui est généralement réalisée par une pièce en matériau plastique souple de faible épaisseur. Elle apporte une raideur à cette peau de pare-chocs afin que si un utilisateur s'appuie sur ladite peau de pare-chocs, celle-ci résiste et ne s'enfonce pas, donnant une impression de solidité. De plus, cette rigidité de l'armature de pare-chocs permet d'y fixer des accessoires, comme par exemple un klaxon ou des faisceaux électriques. Cette armature s'étend derrière la peau de pare-chocs, et jusque sous le nez de capot. Un élément de décoration de type calandre est parfois disposé entre le nez de capot et la partie haute de la peau de pare-chocs, l'armature de pare-chocs s'étendant derrière cette calandre, et parfois formant une partie de celle-ci. L'armature est fixée sur la traverse de pare-chocs, ainsi que sur des éléments de structure du véhicule comme par exemple sur une traverse de support de radiateur de refroidissement. Une telle conception est connue sur le véhicule Peugeot 508 ^{®} de 2018. Par ailleurs, le document WO2006/111299 décrit une conception similaire dans laquelle une armature fixée à la traverse de pare-chocs s'étend derrière une grille d'entrée d'air de calandre.

La rigidité de cette armature de pare-chocs est un inconvénient en cas de choc avant contre un piéton. En effet, elle génère des points durs en cas de choc contre un piéton qui crée des efforts importants sur le piéton, en particulier au niveau du fémur pour un adulte ou au niveau de la tête d'un enfant. Le document WO 2019/058039 A1 décrit un véhicule conforme au préambule de la revendication 1.

L'objectif de l'invention est de remédier à ces inconvénients. En particulier, un des buts de l'invention est de proposer un véhicule ayant une bonne qualité perçue avec une peau de pare-chocs maintenue tout en réduisant les risques de blessure en cas de choc avec un piéton.

Ce but est atteint selon l'invention, grâce à un véhicule ayant les caractéristiques de la revendication 1.

Ainsi avantageusement, l'armature va être maintenue verticalement par son appui sur les supports et donc va pouvoir résister aux efforts verticaux, la verticale étant prise dans le référentiel du véhicule. Ainsi si un utilisateur appuie sur la peau de pare-chocs située à proximité ou au-dessus de l'armature, la peau de pare-chocs ne s'effondrera pas et donnera l'impression d'être rigide. Par contre en cas de choc contre piéton, l'armature se déplacera longitudinalement, vers l'intérieur du véhicule, et ainsi réduire les efforts subis par le piéton et donc les risques de blessure.

Selon l'invention, le support et l'interface de maintien comportent un moyen de blocage de ladite interface de maintien suivant la direction transversale au véhicule.

Selon l'invention, le moyen de blocage est formé par deux nervures sur le support et s'étendant parallèlement à l'axe longitudinal, c'est-à-dire à la direction longitudinale du véhicule, écartées l'une de l'autre, et l'interface de maintien comporte une saillie dans la direction verticale et s'étendant entre les nervures suivant la direction transversale au véhicule sur une distance sensiblement égale à l'écartement entre ces deux nervures.

Ainsi avantageusement, la saillie vient bloquer l'interface de maintien transversalement de manière simple, sans nécessité de moyen de fixation. L'installation de l'armature sur le véhicule est simple et rapide à réaliser. De plus, cette saillie permet de centrer correctement l'armature transversalement.

Dans un mode de réalisation particulier de l'invention, l'interface de maintien comporte une surface d'appui plane disposée au moins de part et d'autre de la saillie suivant l'axe transversal et en appui contre les deux nervures.

Ainsi avantageusement, l'armature s'appuie de manière stable sur le support et est maintenue de manière efficace.

Dans un autre mode de réalisation de l'invention, l'interface de maintien est une patte de maintien comportant une paroi d'appui sensiblement parallèle aux axes longitudinal et transversal du véhicule, disposée plus bas suivant l'axe vertical, en se plaçant dans le référentiel du véhicule, que le reste de l'armature. La paroi d'appui comporte la surface d'appui. La patte de maintien comporte en outre au moins deux parois latérales parallèles à l'axe longitudinal, reliées chacune à l'un des bords de la paroi d'appui, s'étendant du côté de l'armature, donc vers l'armature, et une paroi supérieure reliant les deux parois latérales de sorte à former un prisme de base trapézoïde, des nervures de rigidification s'étendant dans le prisme entre des parois adjacentes.

Ainsi avantageusement, l'interface de maintien est rigide et peut résister à des efforts important, tout en étant de conception simple, par exemple en étant issue de matière de l'armature.

Dans un mode de réalisation particulier de l'invention, le véhicule comporte deux blocs optiques situés de part et d'autre de l'armature dans la direction transversale du véhicule, chacun des blocs optiques comportant une patte de fixation fixée à la traverse, l'armature comprenant deux interfaces de maintien et chaque patte de fixation formant chacun un support sur laquelle s'appuie respectivement une des interfaces de maintien.

Ainsi avantageusement, il n'est pas nécessaire d'ajouter une pièce complémentaire pour former les supports, ceux-ci étant réalisés par les pattes de fixation des blocs optiques. Le coût est réduit et le montage simplifié en évitant de créer une pièce spécifique pour réaliser le support.

Dans un autre mode de réalisation de l'invention, chaque patte de fixation comporte un bras de liaison s'étendant principalement dans un plan parallèle à l'axe transversal et vertical, une platine de fixation fixée à la traverse et s'étendant dans un plan parallèle à l'axe transversal et longitudinal, vers l'avant du véhicule, la platine de fixation formant le support sur lequel s'appuie l'interface de maintien, et l'interface de maintien étant distante du bras de liaison dans l'axe longitudinal.

Ainsi avantageusement, l'interface de maintien peut se déplacer longitudinalement, notamment vers l'arrière du véhicule, en cas de choc de sorte à limiter les efforts transmis au piéton par l'armature.

Dans un autre mode de réalisation de l'invention, la traverse comporte un ou des supports intermédiaires fixés à la traverse, sur lequel ou lesquels sont fixées le ou les supports

L'invention sera mieux comprise à la lecture de la description qui va suivre, donnée uniquement à titre d'exemple et faite en se référant aux dessins annexés, sur lesquels :
[Fig. 1] représente une vue de l'avant d'un véhicule suivant l'invention, avec une armature de pare-chocs et une traverse de pare-chocs vue en transparence au travers d'une peau de pare-chocs et d'un capot avant.
[Fig. 2] représente une vue avant de l'armature de pare-chocs fixée à la traverse de pare-chocs, et des blocs optiques
[Fig. 3] représente une vue de l'armature de pare-chocs seule.
[Fig. 4] représente une vue de la patte de fixation, en vue de face du véhicule.
[Fig. 5] est une vue en section A-A d'une patte de fixation, telle qu'identifiée en figure 4.

Les dessins sont des représentations schématiques pour faciliter la compréhension de l'invention. Les composants ne sont pas forcément représentés à l'échelle. Les mêmes références correspondent aux mêmes composants d'une figure à l'autre. L'axe X représente la direction longitudinale du véhicule, l'axe Y la direction transversale et l'axe Z la direction verticale. Les directions avant, arrière, haut, bas sont prises dans le référentiel du véhicule.

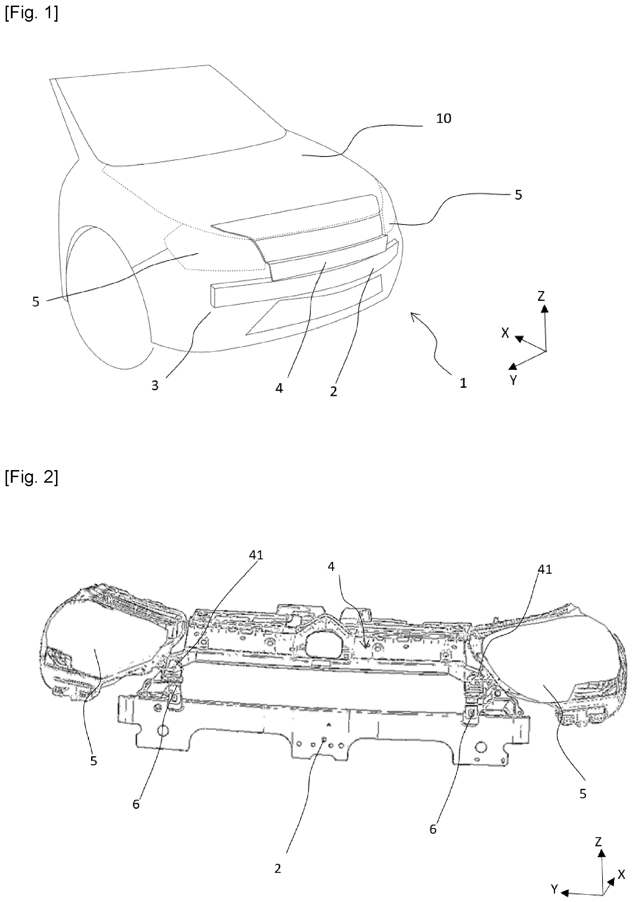

La figure 1 représente l'avant d'un véhicule automobile 1. Le véhicule 1 comporte en face avant une traverse 2 de pare-chocs s'étendant dans une direction transversale Y au véhicule, une peau 3 de pare-chocs, une armature 4 de pare-chocs. La peau de pare-chocs 3 et la traverse 2 sont disposées du côté de la peau de pare-chocs 3 orienté vers l'intérieur du véhicule, c'est-à-dire derrière la peau de pare-chocs 3. Des blocs optiques 5 sont disposés transversalement de part et d'autre de l'armature 4. Le véhicule 1 comporte un capot avant 10, s'étendant jusqu'à la peau de pare-chocs 3.

Comme illustré en figure 2, l'armature 4 comporte une interface 41 de maintien coopérant avec un support 6 fixé à la traverse 2. L'armature 4 s'appuie verticalement sur les supports 6 par ses interfaces de maintien 41, de manière à empêcher ladite armature 4 de se déplacer suivant la direction verticale Z et vers le bas du véhicule 1, tout en laissant libre les déplacements de ces interfaces de maintien 41 dans une direction longitudinale X au véhicule 1. Dans le mode de réalisation de la figure 2, l'armature 4 comporte deux interfaces de maintien 41, s'appuyant sur deux supports 6.

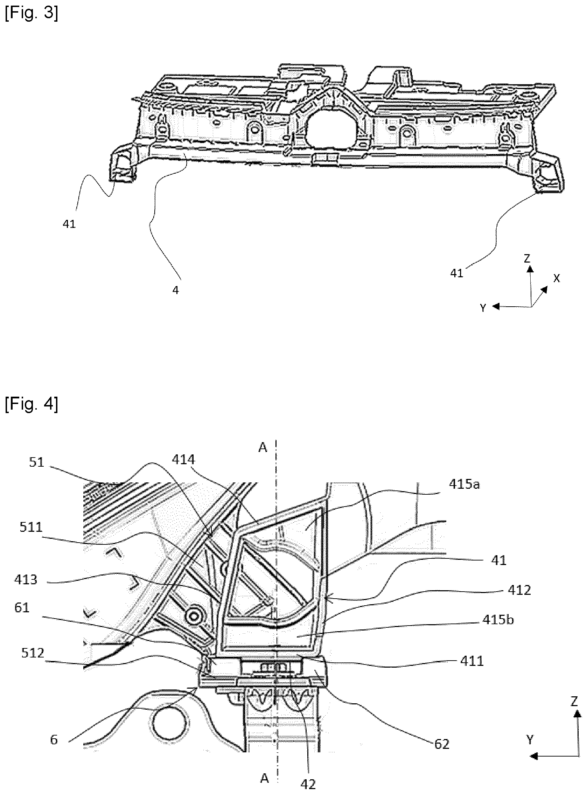

Comme illustré en figure 3, les interfaces de maintien 41 sont chacune sous la forme d'une patte de maintien 41.

Comme illustré en figure 4, afin de bloquer transversalement l'armature 4, le support 6 et l'interface de maintien 41 comportent un moyen de blocage de ladite interface de maintien 41 suivant la direction transversal Y. Ce moyen de blocage est formé par deux nervures 61, 62 s'étendant parallèlement à l'axe longitudinal X, espacée l'une de l'autre transversalement, et l'interface de maintien 41 comporte une saillie 42 dans la direction verticale Z et s'étendant entre les nervures 61, 62 suivant la direction transversale Y au véhicule 1 sur une distance sensiblement égale à l'écartement entre ces deux nervures 61, 62. Cette saillie 42 est par exemple de forme longitudinale, s'étendant dans la direction transversale Y. Les extrémités de cette saillie 42 sont alors au contact avec les nervures 61 et 62 pour réaliser ce blocage transversale.

L'interface de maintien comporte une surface d'appui plane disposée au moins de part et d'autre de la saillie 42 suivant l'axe transversal Y et en appui contre les deux nervures 61, 62. C'est-à-dire que la surface d'appui est au contact sur la surface supérieure des nervures 61, 62 qui s'étend sensiblement dans un plan parallèle à l'axe horizontal X et transversal Y du véhicule.

Comme illustré en figure 3 et 4, l'interface de maintien 41 forme une patte de maintien qui comporte une paroi d'appui 411 sensiblement parallèles aux axes longitudinal X et transversal Y du véhicule, disposé plus bas suivant l'axe vertical Z en se plaçant dans le référentiel du véhicule, que le reste de l'armature 4, la paroi d'appui 411 comportant la surface d'appui. C'est-à-dire que l'extrémité de la patte de maintien 41 non reliée à l'armature 4 est située plus bas que les autres parties de l'armature 4. La patte de maintien 41 comporte aussi deux parois latérales 412 et 413 parallèles à l'axe longitudinal X, reliées chacune à l'un des bords de la paroi d'appui 411. Elles s'étendent du côté de l'armature 4, c'est-à-dire vers le haut du véhicule 1. Une paroi supérieure 414, en vis-à-vis de la paroi d'appui 411, relie les deux parois latérales 412, 413 de sorte à former un prisme de base trapézoïde. Des nervures de rigidification 415a, 415b s'étendant à l'intérieur du prisme formé par les parois latérales 412, 413, la paroi supérieure 414 et la paroi d'appui 411. Ces nervures de rigidification 415a, 415b s'étendent entre des parois 412, 413, 414, 411 adjacentes. Par exemple, dans la figure 4, une nervure de rigidification 415a s'étendent entre la paroi supérieur 414 et l'une des parois latérales 412, et une autre nervure de rigidification 415b s'étend sur la paroi d'appui 411, reliant les deux parois latérales 412 et 413 entre elles. La patte de fixation est reliée au reste de la structure 4 par l'une des parois latérales 412 ou 413.

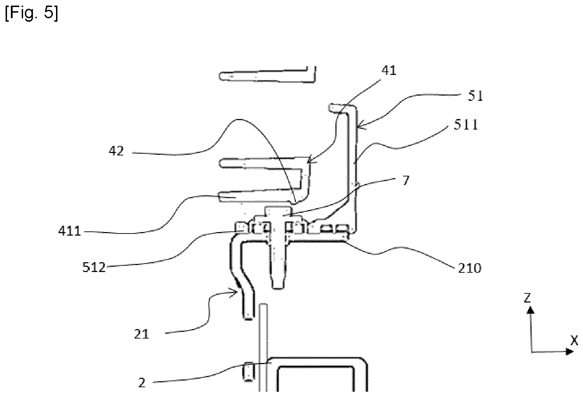

Chacun des blocs optiques 5 comporte une patte de fixation 51 fixée à la traverse 2. Chaque patte de fixation 51 forme un support 6 sur lequel chaque interface de maintien 41 de l'armature 4 s'appuie. Comme illustré dans le mode de réalisation de la figure 4 et 5, chaque patte de fixation 51 comporte un bras de liaison 511 s'étendant principalement dans un plan parallèle à l'axe transversal Y et vertical Z, et une platine de fixation 512 s'étendant dans un plan parallèle à l'axe transversal Y et longitudinal X, vers l'avant du véhicule 1. La platine de fixation 512 forme le support 6 sur lequel s'appuie l'interface de maintien 41. Cette platine de fixation 512 comporte donc les deux nervures 61 et 62 sur sa face orientée du côté de l'armature 4, c'est-à-dire vers le haut, sur lesquelles vient se mettre en appui la paroi d'appui 411 de l'interface de maintien 41, avec la saillie 42 insérée entre ces deux nervures 61, 62.

L'interface de maintien 41 est distante du bras de liaison 511 dans la direction de l'axe longitudinal X. C'est-à-dire que la patte de maintien 41 est distante du bras de liaison 511 de la patte de fixation 51, dans la direction longitudinale X. Le bras de liaison 511 est située derrière l'interface de maintien 41, c'est-à-dire d'avantage vers l'arrière du véhicule. Ainsi, un déplacement de la patte de maintien 41 par rapport à la patte de fixation 51, dans l'axe longitudinal X, est possible, notamment un déplacement vers l'arrière du véhicule 1.

La traverse 2 comporte des supports intermédiaires 21 s'étendant verticalement vers le haut. Ces supports intermédiaires 21 sont par exemple fixés à la traverse 2 par des cordons de soudures ou par des systèmes vis écrou. Comme illustré en figures 4 et 5, les supports intermédiaires 21 forment un L renversée, l'une des branches du L étant verticale et fixée à la traverse 2, l'autre au-dessus étant suivant un plan parallèle aux axes longitudinal X et transversal Y, dite branche horizontale 210. Chaque patte de fixation 51 est fixée par sa platine de fixation 512 sur la branche horizontale 210 de chacun de ces supports intermédiaires 21. La patte de fixation 51 est fixée à la branche horizontale 210 par un système vis-écrou, au niveau de sa platine de fixation 512 : cette platine de fixation 512 comporte un trou de passage entre les nervures 61 et 62 traversée par une vis. La tête de la vis 7 se place entre les nervures 61 et 62. La vis se visse dans un trou fileté situé dans la branche horizontale 210 du support intermédiaire 21. La hauteur des nervures 61 et 62, ainsi que de la tête de la vis 7, sont choisies de sorte que la tête de la vis soit plus basse que les nervures 61 et 62. Ainsi, l'interface de maintien 41, et notamment la saillie 42, ne rentre pas en contact avec la tête de la vis 7. Les bras de liaison 511 comportent des nervures de renfort pour les renforcer.

L'armature 4 peut être fixée par ailleurs à des éléments de la structure du véhicule 1, comme par exemple à une traverse de façade avant s'étendant au-dessus d'un radiateur de refroidissement, disposé derrière la traverse de pare-chocs 2 et sous le capot avant 10 du véhicule 1. L'armature 4 s'étend alors derrière la peau 3 de pare-chocs ainsi que sous la partie avant du capot 10, comme illustré en figure 1. En variante non représentée, un élément de décoration de type calandre peut en être positionné entre l'avant du capot 10 et la peau de pare-chocs 3, l'armature 4 s'étendant aussi derrière cette calandre.

## Revendications

1. Véhicule (1) comportant à l'avant une traverse (2) de pare-chocs s'étendant dans une direction transversale (Y) au véhicule (1), une peau de pare-chocs (3), une armature (4) de pare-chocs disposée du côté de la peau de pare-chocs (3) orientée vers l'intérieur du véhicule, l'armature (4) comportant une interface (41) de maintien coopérant avec un support (6) fixé à la traverse (2), l'armature (4) s'appuyant verticalement sur le support (6) par son interface de maintien (41), de manière à empêcher ladite armature (4) de se déplacer suivant la direction verticale (Z) du véhicule et vers le bas du véhicule (1), tout en laissant libre les déplacements de l'interface de maintien (41) dans une direction longitudinale (X) au véhicule (1), le support (6) et l'interface de maintien (41) comportant un moyen de blocage de ladite interface de maintien (41) suivant la direction transversale (Y), **caractérisé en ce que** le moyen de blocage est formé par deux nervures (61, 62) sur le support (6) et s'étendant parallèlement à l'axe longitudinal (X), écartées l'une de l'autre, et l'interface de maintien (41) comporte une saillie (42) dans la direction verticale (Z) et s'étendant entre les nervures (61, 62) suivant la direction transversale (Y) au véhicule (1) sur une distance sensiblement égale à l'écartement entre ces deux nervures (61, 62).

2. Véhicule (1) suivant la revendication précédente, dont l'interface de maintien (41) comporte une surface d'appui plane disposée au moins de part et d'autre de la saillie (42) suivant l'axe transversal (Y) et en appui contre les deux nervures (61, 62).

3. Véhicule (1) suivant la revendication précédente, dont l'interface de maintien (41) est une patte de maintien comportant une paroi d'appui (411) sensiblement parallèle aux axes longitudinal (X) et transversal (Y) du véhicule, disposée plus bas suivant l'axe vertical (Z) en se plaçant dans le référentiel du véhicule, que le reste de l'armature (4), la paroi d'appui (411) comportant la surface d'appui, au moins deux parois latérales (412, 413) parallèles à l'axe longitudinal (X), reliées chacune à l'un des bords de la paroi d'appui (411), s'étendant du côté de l'armature, et une paroi supérieure (414) reliant les deux parois latérales (412, 413) de sorte à former un prisme de base trapézoïde, des nervures de rigidification s'étendant dans le prisme entre des parois (412, 413, 414, 411) adjacentes.

4. Véhicule (1) suivant la revendication précédente, comportant deux blocs optiques (5) situés de part et d'autre de l'armature (3) dans la direction transversale (Y) du véhicule, chacun des blocs optiques (5) comportant une patte de fixation (51) fixée à la traverse (2), l'armature (4) comprenant deux interfaces de maintien (41) et chaque patte de fixation (51) formant chacun un support (6) sur laquelle s'appuie respectivement une des interfaces de maintien (41).

5. Véhicule (1) suivant la revendication précédente, dont chaque patte de fixation (51) comporte un bras de liaison (511) s'étendant principalement dans un plan parallèle à l'axe transversal (Y) et vertical (Z), une platine de fixation (512) fixée à la traverse (2) et s'étendant dans un plan parallèle à l'axe transversal (Y) et longitudinal (X), vers l'avant du véhicule (1), la platine de fixation (512) formant le support (6) sur lequel s'appuie l'interface de maintien (41), et l'interface de maintien (41) étant distante du bras de liaison (511) dans l'axe longitudinal (X).

6. Véhicule suivant l'une des revendications précédentes, comportant un ou des supports intermédiaires (21) fixés à la traverse (2), sur lequel ou lesquels sont fixées le ou les supports (6)

## Patentansprüche

1. Fahrzeug (1) mit einem in einer Querrichtung (Y) zum Fahrzeug (1) verlaufenden Stoßfängerquerträger (2), einer Stoßfängerhaut (3), einer an der Stoßfängerhaut (3) nach innen gerichteten Stoßfängerverkleidung (4) angeordneten Stoßfängerarmatur (4), **dadurch gekennzeichnet, dass** die Armatur (4) eine mit einem Träger zusammenwirkende Halteschnittstelle (41) aufweist (6), der am Querträger (2) befestigt ist, wobei sich der Anker (4) über seine Halteschnittstelle (41) vertikal auf dem Träger (6) abstützt, um zu verhindern, dass sich der Anker (4) in vertikaler Richtung (Z) des Fahrzeugs und nach unten bewegt, während die Bewegung der Halteschnittstelle (41) in einer Längsrichtung (X) des Fahrzeugs (1) freibleibt , der Träger (6) und die Halteschnittstelle (41) mit Mitteln zum Blockieren der Halteschnittstelle (41) in Querrichtung (Y). **dadurch gekennzeichnet, dass** die Blockiermittel durch zwei Rippen (61, 62) auf dem Träger (6) gebildet sind, die sich parallel zur Längsachse (X) erstrecken und voneinander beabstandet sind, und die Halteschnittstelle (41) mit einem Vorsprung (42) in vertikaler Richtung (Z), der sich zwischen den Rippen (61, 62) in Querrichtung (Y) zum Fahrzeug (1) über einen Abstand erstreckt, der im Wesentlichen gleich dem Abstand zwischen diesen beiden Rippen (61, 62) ist.

2. Fahrzeug (1) nach dem vorhergehenden Anspruch, bei dem die Halteschnittstelle (41) eine ebene Auflagefläche aufweist, die zumindest beidseits des Vorsprungs (42) entlang der Querachse (Y) und in Anlage an den beiden Rippen (61, 62) angeordnet ist.

3. Fahrzeug (1) nach dem vorhergehenden Anspruch, dessen Halteschnittstelle (41) eine Haltelasche ist, die eine Stützwand (411) aufweist, die im Wesentlichen parallel zu der Fahrzeuglängsachse (X) und der Fahrzeuglängsachse (Y) verläuft und in der Fahrzeugbezugslinie tiefer angeordnet ist als der Rest des Ankers (4), die Stützwand (411) mit der Auflagefläche mindestens zwei zur Längsachse (X) parallele Seitenwände (412, 413), die jeweils mit einem der ankerseitigen Ränder der Stützwand (411) verbunden sind, und eine die beiden Seitenwände (412, 413) verbindende obere Wand (414) Um ein trapezförmiges Basisprisma zu bilden, erstrecken sich im Prisma zwischen benachbarten Wänden (412, 413, 414, 411) verlaufende Versteifungsrippen.

4. Fahrzeug (1) nach dem vorhergehenden Anspruch, das zwei optische Blöcke (5) aufweist, die sich auf beiden Seiten des Ankers (3) in der Querrichtung (Y) des Fahrzeugs befinden, wobei jeder der optischen Blöcke (5) eine Befestigungslasche (51) aufweist, die an dem Querträger (2) befestigt ist, wobei die Armierung (4) zwei Halteschnittstellen (41) aufweist und jede Befestigungslasche (51) jeweils einen Träger (6) bildet auf der jeweils eine der Halteschnittstellen (41) aufliegt.

5. Fahrzeug (1) nach dem vorhergehenden Anspruch, bei dem jede Befestigungslasche (51) einen Verbindungsarm (511) aufweist, der sich im Wesentlichen in einer zur Querachse (Y) parallelen und vertikalen Ebene (Z) erstreckt, wobei an dem Querträger (2) eine Befestigungsplatte (512) befestigt ist und sich in einer zur Querachse (Y) parallelen Ebene nach L erstreckt Vor dem Fahrzeug (1) bildet die Befestigungsplatte (512) den Träger (6), auf dem die Halteschnittstelle (41) abgestützt ist, und die Halteschnittstelle (41) ist in der Längsachse (X) vom Verbindungsarm (511) beabstandet.

6. Fahrzeug nach einem der vorhergehenden Ansprüche, mit einem oder mehreren am Querträger (2) befestigten Zwischenträgern (21), an denen der oder die Träger (6) befestigt sind.

## Claims

1. Vehicle (1) having at the front a bumper cross (2) extending in a cross-direction (Y) to the vehicle (1), a bumper skin (3), a bumper frame (4) arranged on the side of the bumper skin (3) facing inward of the vehicle, characterized that the frame (4) has a cooperant support interface (41) with a support (6) attached to the crossover (2), the reinforcement (4) leaning vertically on the support (6) through its maintenance interface (41), so as to prevent the crossover (4) from moving in the vertical direction (Z) of the vehicle and towards the bottom of the vehicle (1), while leaving the movement of the maintenance interface (41) in a longitudinal direction (X) at vehicle (1) means the support (6) and the maintenance interface (41) having a means of blocking the said maintenance interface (41) following the cross direction (Y).**characterized by** the means of blocking being formed by two ribs (61, 62) on the support (6) and extending parallel to the longitudinal axis (X), separated from each other, and I support interface (41) has a protruding (42) in the vertical direction (Z) and extending between the ribs (61, 62) following the transverse direction (Y) to the vehicle (1) over a distance approximately equal to the spacing between the ribs (61, 62).

2. Vehicle (1) following the previous claim, whose maintenance interface (41) has a flat support surface arranged at least on either side of the protruding (42) following the transverse axis (Y) and supporting the two ribs (61, 62).

3. Vehicle (1) following the previous claim, the maintenance interface (41) of which is a maintenance tab with a supporting wall (411) substantially parallel to the longitudinal (X) and transverse (Y) axes of the vehicle, located lower in the vertical (Z) axis by placing itself in the vehicle repository, than the rest of the reinforcement (4), the supporting wall (411) having the supporting surface, at least two side walls (412, 413) parallel to the longitudinal axis (X), each connected to one of the edges of the supporting wall (411), extending on the side of the reinforcement, and one upper wall (414) connecting the two side walls (412, 413) of form a trapezoid base prism, stiffening ribs extending in the prism between adjacent walls (412, 413, 414, 411).

4. Vehicle (1) following the previous claim, consisting of two optical blocks (5) located on both sides of the frame (3) in the transverse direction (Y) of the vehicle, each optical block (5) having a fastening leg (51) attached to the bridge (2), the frame (4) having two holding interfaces (41) and each fixing leg (51) forming one support (6) on which one of the holding interfaces is based (41).

5. Vehicle (1) following the previous claim, of which each attachment leg (51) has a connecting arm (511) extending principally in a plane parallel to the transverse (Y) and vertical (Z) axis, a fixing plate (512) fixed to the cross (2) and extending in a plane parallel to the transverse (Y) and longitudinal (X) axis, the front of the vehicle (1), the fastening plate (512) forming the support (6) on which the maintenance interface (41) is supported, and the maintenance interface (41) being distant from the connecting arm (511) in the longitudinal axis (X).

6. Vehicle following one of the preceding claims, with an intermediate carrier(s) (21) attached to the crossing (2), on which the carrier(s) are fixed (6).
